# EUROPEAN PATENT SPECIFICATION

(11) **EP 2 309 872 B1**
(45) Date of publication and mention of the grant of the patent: **28.03.2012**
(21) Application number: 09776235.5
(22) Date of filing: 07.07.2009
(51) Int. Cl.: A23G 3/00, A23G 4/20, A23G 4/06, A23G 3/34, A23G 4/12, A23G 4/02

(54) **POWDERED CHEWING GUM COMPOSITIONS, THE USE THEREOF AND A METHOD OF PREPARING SUCH COMPOSITIONS**
PULVERFÖRMIGE KAUGUMMIZUSAMMENSETZUNGEN, IHRE VERWENDUNG UND EIN VERFAHREN ZUR HERSTELLUNG VON SOLCHEN ZUSAMMENSETZUNGEN
COMPOSITIONS DE GOMME À MÂCHER EN POUDRE, LEUR UTILISATION ET PROCÉDÉ DE PRÉPARATION DE CES COMPOSITIONS

(30) Priority: 08.07.2008 EP 08012295
(43) Date of publication of application: 20.04.2011
(73) Proprietor: Alsiano A/S, 3460 Birkerød (DK)
(72) Inventor: HUMMELUHR, Jens, DK-2920 Charlottenlund (DK); ANDRESEN, Otto, DK-3660 Stenløse (DK); KUSK, Tage Vedsted, DK-4672 Klippinge (DK)
(74) Representative: Bender, Mikkel
(86) International application number: PCT/DK2009/050166
(87) International publication number: WO 2010/003425

(56) References cited:
- EP-A- 0 401 956
- EP-A- 1 350 434
- WO-A-02/069729
- WO-A-03/007727
- WO-A-2004/040995
- WO-A-2006/127494
- US-A- 4 456 629
- US-A- 5 145 696
- US-A1- 2001 053 397
- US-A1- 2006 002 860

## Description

### Technical field

The present invention relates to chewing gum and a method for preparing chewing gum.

### Background of the invention

Production of chewing gum has traditionally been carried out using expensive and dedicated production equipment, which due to the nature of the processes employed, requires large investment. It has therefore hitherto only been profitable to produce chewing gum in large production units. As a result, there are only few chewing gum producers in the world.

In the later years, it has become possible to produce chewing gum tablets by compressing of powdered chewing gum compositions. This is carried out in tabletting machines, which is standard equipment in the pharmaceutical industry, but normally not available to the confectionery industry. Accordingly, there is a need for an alternative production method for producing chewing gum from powdered chewing gum compositions that can be carried out with equipment widely available in small as well as large companies in the confectionery industry, and not requiring heavy investment in expensive apparatus.

Such a method has been described briefly in EP 0814 670 B1. The method uses conventional panning equipment, which is widespread in the confectionery industry, as well as in the pharmaceutical industry. The applicants have, however, observed that said method has a low production yield when carried out with commonly available powdered chewing gum compositions. The low yield is caused by poor adherence of the powdered chewing gum composition particles to the centres being coated. Instead, the powdered chewing gum composition accumulates on the walls of the panning apparatus.

US 6,551,634 B2 discloses chewing or bubble gum pieces comprising a flavouring containing core, an intermediate gummy mass free layer which encapsulates the core, and an outer layer which is an outer layer of a gum piece that is placed in the mouth of a person chewing the gum and contains gummy mass, which outer layer encapsulates the intermediate layer. The outer gummy mass containing layer is applied as a pulverised material. The chewing or bubble gum pieces may comprise a core, which instead of or as a supplement to the flavourings contains medicine mass.

In US 6,558,722 B2, a powdered chewing gum composition is applied containing between about 5 and about 40% chewing gum base. It is mentioned that "if too much dry charge is applied to the wetted cores, the overload of dry charge collects in the back of the pan." It is never specified in a quantitative way what "too much" means. It is therefore implicitly suggested that it is problematic to carry out the application of the dry charge with said powdered chewing gum composition.

European Patent Application No. 1350434 relates to a chewing gum in powder form comprising gum base, referred to as "soft basic gum", together with a sweetener and other typical chewing gum ingredients. The obtained powder can be compressed to form a chewing gum. Within the powdered composition, gum base can have a concentration of up to 48.5% by weight.

U.S. Patent No. 3,152,908 discloses a method for manufacturing a glazed chocolate product in a panning process. The dry glaze composition contains 70% gum arabic together with other water-soluble ingredients, the composition being not suitable for forming a water-insoluble gum base of a chewing gum coating.

U.S. Patent No. 4,456,629 relates to a method for forming a shiny wax coating allowing for printing over the shiny wax coated tablet. There is no indication as to whether or how this technology might be applicable or relevant to chewing gum coatings.

International Patent Application WO 99/13870 teaches a method for producing a chewing gum, wherein the chewing gum composition comprises the physiological cooling agent acyclic carboxamide. Within the composition, the cooling agent is preferably encapsulated by an encapsulating agent comprising maltodextrin or gum arabic. For manufacturing chewing gum, the various ingredients are mixed, discharged from the mixer and shaped into the desired form by rolling and cutting, extrusion or casting. There is no pointer towards coating of centres with chewing gum, or how the disclosed composition might be adapted to that end.

Similarly, U.S. Patent No. 4,238,475 relates to a chewing gum composition comprising therapeutic components, the latter being coated with gum arabic. The chewing gum contains gum base in the range of 8 to 25% by weight and is produced by mixing the various ingredients of the composition. There is made no mention of coating of centres with chewing gum composition, or how the disclosed mixture would be useful or suitable in this respect.

Accordingly, there is still a need in the art for alternative powdered chewing gum compositions that are suitable for production of chewing gum by panning.

Accordingly, an object of the present invention is to provide alternative chewing gum and alternative means of producing chewing gum.

### Summary of the invention

The applicants have now surprisingly observed that by increasing the content of chewing gum base in a powdered chewing gum composition to more than 50% w/w, said poor adherence of the powdered chewing gum composition particles to the centres being coated in a standard panning process is overcome.

Thus, the present invention uses a powdered chewing gum composition which can be applied for coating of any edible and chewable centres in a repeated panning process. The powdered chewing gum composition contains over 50% w/w of chewing gum base, preferably more than 65% w/w of chewing gum base, more preferably more than 75% w/w of chewing gum base. At least 95% w/w of the particles of the composition have a particle size of less than 1200 micron in diameter.

The chewing gum base used in the powdered chewing gum composition of the present invention may have a softening point between 50°C and 65°C, preferably 60°C.

In a preferred embodiment, the powdered chewing gum composition is a powder which is free flowing at temperatures between 5°C and 30°C.

Preferably, the powdered chewing gum composition contains up to 100% but at least 50% w/w of chewing gum base, such as at least 51% w/w, such as at least 52%, at least 53%, at least 54%, at least 55% w/w, such as at least 56%, at least 57%, at least 58%, or at least 59% w/w of chewing gum base.

Even more preferably, the powdered chewing gum composition contains up to 100% but at least 60% w/w of chewing gum base, such as at least 61% w/w, such as at least 62%, at least 63%, at least 64%, at least 65% w/w, such as at least 66%, at least 67%, at least 68%, or at least 69% w/w of chewing gum base.

Even more preferably, the powdered chewing gum composition contains up to 100% but at least 70% w/w of chewing gum base, such as at least 71% w/w, such as at least 72%, at least 73%, at least 74%, at least 75% w/w, such as at least 76%, at least 77%, at least 78%, or at least 79% w/w of chewing gum base.

Even more preferably, the powdered chewing gum composition contains up to 100% but at least 80% w/w of chewing gum base, such as at least 81% w/w, such as at least 82%, at least 83%, at least 84%, at least 85% w/w, such as at least 86%, at least 87%, at least 88%, or at least 89% w/w of chewing gum base.

Said powdered chewing gum composition may contain other ingredients well known in the art, such as flow-improving agents, antioxidants, colourants, flavours, sugars or sugar replacers, e.g. bulk sweeteners, polyols, high intensity sweeteners. As examples of flow-improving agents can be mentioned talc, silica, magnesium stearate, gum arabic and the like. Well known antioxidants include BHT, tocopherol, sodium erythorbate etc.

In order to accommodate additional ingredients, the powdered chewing gum composition in a preferred embodiment contains less than 100% w/w of chewing gum base, such as less than 99% w/w, such as less than 98%, less than 97%, less than 96%, less than 95% w/w, such as less than 94%, less than 93%, less than 92%, or less than 91% w/w of chewing gum base.

In order to be applicable in the panning process, over 95% w/w of the particles of said free flowing powdered chewing gum composition must be below 1200 micron. Preferably, more than 65% of the particles are between 100 and 1000 micron. This has the advantage that the particle size distribution of the inventive composition is similar to the particle size distribution of potential additive powdered compositions such as flavouring agents or the like, thereby facilitating the mixing process.

### Definitions:

The term "chewing gum" as used herein refers to a type of chewable confectionary, part of which is not dissolved during chewing.

The term "chewing gum base" as used herein refers to the part of a chewing gum which is not dissolved during chewing. Chewing gum compositions usually comprise a water soluble bulk portion, a water insoluble chewing gum base portion together with flavouring agents. During chewing, the water soluble portion dissipates with a portion of the flavouring agent. The chewing gum base portion is substantially retained in the mouth throughout the chewing process. Chewing gum base comprises hydrophobic, elastic and non-water soluble substances that enable it to be chewed for a long time without experiencing substantial changes. In other words, chewing gum base as used herein, is the fraction of chewing gum that is water-insoluble and non-digestible. Chewing gum base generally comprises elastomers, resins, fats and oils, waxes, softeners and inorganic fillers. Elastomers may include polyisobutylene, isobutylene-isoprene copolymer and styrene butadiene rubber, as well as natural latexes such as chicle. Resins include polyvinylacetate and terpene resins. Fats and oils may also be included in the chewing gum base, including tallow, hydrogenated and partially hydrogenated vegetable oils, and cocoa butter. Commonly employed waxes include paraffin, microcrystalline and natural waxes such as beeswax and carnauba. The chewing gum base typically also includes a filler component. The filler component may be calcium carbonate, magnesium carbonate, talc, dicalcium phosphate or the like. Chewing gum bases typically also contain softeners, including glycerol monostearate and glycerol triacetate. Further, chewing gum bases may also contain optional ingredients such as antioxidants, colours, and emulsifiers. The definition of chewing gum base as used herein, explicitly excludes gum arabic or similar substances, which are highly soluble in water.

The term "powdered chewing gum composition" as used herein refers to a powder-formed mixture of "chewing gum base" and sweeteners and flavours as well as functional ingredients which may comprise texture regulating agents, flow-improving agents, anticaking agents, antioxidants, colours or the like.

Texture regulating agents may be part of the powdered chewing gum composition in order to optimize the chewability and mouth feel of the chewing gum. Texture regulating agents, also known in the art as plasticizers or plasticizing agents, may include hardened fat, glycerine, lecithin and combinations thereof.

It is noted that in some technical fields, the term "gum" may not be used in the context of the insoluble part of a confectionary as described above, but rather may relate to water-soluble or water-dispersible carbohydrate based hydrocolloids. For example, Kirk-Othmer: Concise Encyclopedia of Chemical Technology, John Wiley & Sons, 1985, has the following definitions: "Commercial gums are water-soluble or water-dispersible hydrocolloids" (pp. 202 - 203). "The term gums denote a group of industrially useful polysaccharides or their derivatives that hydrate in hot or cold water to form viscous solutions or dispersions" (p. 572 ff). These gums include gum arabic (gum acacia), gum tragacanth, locust bean gum, guar gum, dextran, xanthan gum, agar-agar, carrageenan and several others. They all lack the most important property of chewing gum, to remain in the mouth even after prolonged chewing. Therefore, this terminology relating to "gums" as such is not applicable to the teachings presented herein.

The term "softening point" as used herein refers to a temperature measured by the Ring-and-Ball assay known in the art.

The term "free flowing" as used herein in relation to a powder means that said powder moves like a liquid when poured.

The term "flow-improving agent" as used herein means any substance which may be added to a powder in order to make it free flowing.

The term "standard panning apparatus" as used herein refers to apparatus for panning as e.g. the Driacoater® produced by Driam GmbH, various coating pans produced by A.M.P-Rose in the U.K., and others. A "panning process" is defined as a process for making e.g. chewing gum in which layers are slowly deposited onto a core by spinning the chewing gum in a horizontally-mounted pan also know as a "standard panning apparatus". The process is well known to the person skilled in the art.

The term "cud-size" as used herein means the non-soluble part which remains after all other ingredients contained in the original chewing gum piece have been dissolved by chewing.

By w/w is meant the weight based on dry weight.

### Detailed description of the invention

The applicants have surprisingly observed that by increasing the content of chewing gum base in a powdered chewing gum composition to more than 50% w/w, the aforementioned poor adherence of the powdered chewing gum composition particles to the centres being coated is avoided. Thus, the present invention relates to a powdered chewing gum composition, containing over 50% w/w chewing gum base wherein at least 95% w/w of the particles of the powdered chewing gum composition have a particle size of less than 1200 micron. A suitable gum base used in the composition of the present invention may, for example, correspond to the "soft basic gum" disclosed in EP 1350434 A1 on page 9, lines 30-34.

Best results are seen when the powdered chewing gum composition contains between 50% w/w and 90% w/w chewing gum base. Even better results are seen when the powdered chewing gum composition contains between 65% w/w and 85% w/w chewing gum base.

It is preferred that the chewing gum base used in the compositions has a softening point of between 50-65°C, most preferably between 58 - 62°C, because a softening point lower than 58°C makes the powder preparation sticky at the process temperature, reducing the desired free flowability. A softening point higher than 62°C makes the final gum uncomfortably hard to chew. The interval of 50-65°C appears to suitably delimit the acceptable range of softening points for chewing gum base used in the present invention.

According to a preferred embodiment, the chewing gum base used for the composition of the present invention comprises elastomers. Elastomers may include polyisobutylene, isobutylene-isoprene copolymer and styrene butadiene rubber, as well as natural latexes such as chicle.

According to another embodiment, the chewing gum base used for the composition of the present invention comprises resins. Suitable resins may include polyvinylacetate and terpene resins.

According to yet another embodiment, the chewing gum base used for the composition of the present invention comprises fats and/or oils, which may include including tallow, hydrogenated and partially hydrogenated vegetable oils, and cocoa butter.

According to yet another embodiment, the chewing gum base used for the composition of the present invention comprises waxes. Suitable waxes include paraffin, microcrystalline and natural waxes such as beeswax and carnauba.

According to yet another embodiment, the chewing gum base used for the composition of the present invention comprises softeners. Suitable softeners may include glycerol monostearate and glycerol triacetate.

According to yet another embodiment, the chewing gum base used for the composition of the present invention comprises inorganic fillers. Suitable filler components may be calcium carbonate, magnesium carbonate, talc, dicalcium phosphate or the like.

According to an expedient embodiment, the chewing gum base used for the composition of the present invention comprises 8-16% w/w of at least one elastomer, 12-19% w/w of polyvinyl acetate, 14-30% w/w of resin, 10-22% w/w of at least one hydrogenated and/or partially hydrogenated vegetable oil, 0-7% w/w of wax, 5-9% w/w of at least one emulsifier and/or technological assistant such as glycerol monostearate, acetylated monoglycerides, lecithin, sugar esters and/or triacetin, 15-40% w/w of inert mineral fillers, and 0-0.1 % w/w of antioxidant.

In order to be applicable in the panning process, over 95% w/w of the particles of said free flowing powdered chewing gum composition must be below 1200 micron in diameter. To secure that the major part of the powdered chewing gum composition is deposited on the centres, and that the resulting coating is smooth and even, it is preferred that at least 65% w/w of the particles of the powdered chewing gum composition according to the invention have a particle size between 100 and 1000 micron. Even more preferably, at least 66% w/w, such as at least 67%, at least 68%, at least 69%, at least 70% w/w, at least 71 %, at least 72%, at least 73% of the particles of the composition according to the invention should have a particle size between 100 and 1000 micron.

It is preferred that the powdered chewing gum composition is a powder which is free flowing at temperatures between 5°C and 30°C.

The powdered chewing gum composition may contain other ingredients well known in the art, such as flow-improving agents, antioxidants, colourants, flavours, bulking agents and sweeteners, e.g. bulk sweeteners, polyols or high intensity sweeteners.

Flow-improving agents may include talc, silica, silicate types such as magnesium and aluminumsilicate, titanium dioxide, magnesium stearate, gum arabic, and other suitable flow-improving agents and/or combinations thereof. Well known antioxidants include BHT, tocopherol, sodium erythorbate etc.

Bulk sweeteners are well known in the art and may include both carbohydrate sweeteners and carbohydrateless sweeteners, or combinations thereof. Carbohydrate sweeteners may include carbohydrate containing components including, but not limited to, sucrose, glucose, maltose, maltodextrin, dried invert sugar, dried agave syrup, dried grape juice, fructose, lactose, dried glucose syrups, and the like, alone or in combination. Carbohydrateless bulk sweeteners may include, but are not limited to polyols such as isomalt, sorbitol, mannitol, xylitol, hydrogenated starch hydrolysates, malititol and the like, alone or in combination. Further, carbohydrateless sweeteners include high intensity sweeteners, such as aspartame, saccharin and its salts, sucralose, stevioside, thaumatin, cyclamic acid and its salts, acesulfame and its salts, or any other suitable sweetener, alone or in combination.

Bulking agents may include carbohydrates or polyols which also provide sweetness to the product. However, since such materials are caloric, they may also be substituted with low-caloric bulking agents. Low caloric bulking agents may include inulin (Raftiline HP®, Beneo HPX®), Fructooligosaccarides (Raftilose® P95) (NutraFlora®), lsomaltulose (Palatinose®), Guar Gum Hydrosylate (Sun Fiber®), or indigestible dextrin (Fibersol-2® or Nutriose®), or any other suitable low caloric bulking agent.

The powdered chewing gum composition may contain a bulking agent and/or sweetening agent, said bulking and/or sweetening agent being used in an amount greater than about 1% w/w but not greater than 49%, preferably greater than about 10% w/w but not greater than 49%, more preferably greater than about 25% w/w but not greater than 49%, most preferred greater than about 35% w/w but not greater than 49%.

Colourants provide the desired colour characteristics or remove any undesired colour by whitening the gum portion of the coating. Powdered or liquid colouring agents may optionally be added during mixing of the powdered chewing gum composition. Colourants and whiteners may include, but are not limited to, fruit and vegetable extracts, titanium dioxide, rice starch or mixtures and/or dispersions thereof.

Flavouring agents may include essential oils, synthetic flavours or mixtures thereof including, but not limited to, flavouring aromatics, oleo resins, extracts derived from plants, leaves, flowers, fruits and so forth, and combinations thereof as known by those ordinarily skilled in the art. Flavour oils may include, but are not limited to, oils derived from plants and fruits, peppermint oil, spearmint oil, cinnamon oil, other mint oils, clove oil, oil of wintergreen, anise and the like. Also useful are artificial or natural fruit flavours such as citrus oils including lemon, orange, grape, lime and grapefruit and fruit essences including apple, strawberry, cherry, pineapple and so forth. Natural and artificial flavouring agents may be combined in any sensorial acceptable fashion.

The powdered chewing gum composition may contain a flavouring agent, said flavouring agent being used in an amount greater than about 0.1% w/w, preferably greater than about 2% w/w, more preferably greater than about 5% w/w. Thus, in a preferred embodiment the flavouring agent is used in an amount of between 0.1% w/w and 10% w/w, preferably between about 2% w/w, more preferably greater than about 5% w/w to about 10% w/w.

Particularly, in one aspect, the powdered chewing gum composition consist essentially of:
a) 50% w/w to about 99% w/w chewing gum base,
b) about 1% w/w to about 45% w/w bulking and/or sweetening agent
c) about 0.1 % w/w to about 10% w/w flavouring agent,
d) about 1% w/w to about 30% w/w talc, and optionally
e) about 0.1 % w/w to about 20% w/w of a further flow improving agent

The present invention relates to a chewing gum comprising a) a core compartment, and b) one or more layers comprising the composition according to the present invention.

In another aspect, the invention relates to a chewing gum comprising at least two distinct layers, wherein at least one layer contains a composition according to the invention.

In another aspect, the invention relates to a chewing gum comprising a) a core compartment, b) one or more intermediate layer compartments, and c) an outer layer compartment. Such chewing gums are commonly referred to as centre-filled chewing gums. According to this aspect of the invention, at least one of the intermediate layer compartments contains a composition according to the invention.

In the centre filled chewing gums according to the invention, the edible, chewable core compartment may comprise one or more compounds selected from confectioneries, nuts, dried or fresh fruits, flavourings, or preparations, such as tablets, capsules, sheets, compressed pills, wafers, easy melt tablets, semi-liquid or liquid preparations, the preparations comprising one or more active pharmaceutical ingredients (API's) and/or nutraceutical supplements, such as but not limited to, fish oil, omega-3 fatty acids, prebiotics, probiotic bacteria, caffeine, guarana, vitamins, minerals and enzymes.

The one or more intermediate compartments may comprise a solution acting as a glue (sugar containing or sugar free), and may further comprise flavour and colour, gum arabic, fine sugar or polyols for smoothening or a sealing component with a low permeability. However, at least one of the intermediate compartments must comprise a composition according to the invention.

The outer layer compartment preferably comprises no chewing gum base but is a finishing of the product for visual impact and/or a sealing of the product to reduce moisture absorption in order to improve shelf life. The outer layer may contain sugar and/or polyols, gum arabic, CMC, wax, fat, flavour and colour.

According to a preferred embodiment of the inventive chewing gum, the chewing gum composition constitutes at least 10% w/w, preferably at least 25% w/w, of the chewing gum according to the present invention. Hereby, it is ensured that the edible, chewable core compartment is surrounded by a quantity of chewing gum composition sufficient for sustained chewing of the chewing gum.

Accordingly, in another aspect, the invention relates to a method for production of a chewing gum according to the invention, the method comprising the steps of:
(a) providing a core composition; and
(b) coating of the core composition with a composition according to the present invention by use of a panning process; and optionally
(c) coating the outer intermediate layer with an outer finishing layer by use of a panning process.

### Examples

Any specifications herein are merely illustrative of the principles of the present invention.

The aim of the experiments was to produce a piece of chewing gum using a powdered chewing gum composition via a standard coating process. The chewing gum should have a good chewability compared to standard chewing gum. A coating procedure was carried out in a 9-inch traditional stainless steel coating pan (standard panning apparatus).

In the coating is used the following coating materials and centres.

### Soft coating glue (liquid):

1500 g maltitol syrup 75% d.s. (Maltisorb 75/75 Roquette Freres)
60 g gum arabic 396-I (Instant Senegal quality, Alland & Robert)
30 g food grade titanium dioxide
Heat under stirring to 70°C and keep at this temperature.

### Pre-gumming;

Pre-gumming is a coating step where cracks and un-even surfaces are smoothened for a better performance of the coating procedure and the over-all impression. Pre-gumming is performed by adding a gum arabic solution (40% d.s. w/w) and dusting with Maltisorb P35 (maltitol crystalline in fine particles - average 35 micron).

The pre-gumming will also lower the migration of water from the centre (and into the centre) in-between the different coating materials.

### Hard coating (top coating):

1040 g maltitol powder (Maltisorb P200, Roquette Freres)
15 g gum Arabic 396-I (Instant Senegal quality, Alland & Robert)
20 g food grade titanium dioxide
460 g water

Dissolve by stirring, and heat under stirring to 80°C

### Powdered chewing gum composition 1 (according to the invention) used in example 1.

"GBP-T1", a powdered chewing gum composition containing chewing gum base 58% (from Gum Base Company Italy), isomalt 12%, maltitol 10%, gum Arabic 10%, talc 10%. The product is produced according to inventor specifications.

### Powdered chewing gum composition 2Gum (standard commercially available) used in example 2.

"All in Gum" - Sugar Free (SF), Cafosa - a powdered chewing gum composition containing 24-26% chewing gum base and 74-76% sorbitol powder, flavour and colour free. Commercially available at Cafosa, Barcelona, Spain.

### Centres.

1500 gram soft compressed tablets, 10 mm diameter, weight 0.65 g each.

### Example 1.

During 3.5 hours of active coating time 33 layers are applied according to table 1.

The resulting tablets have a 60/40 ratio between centre and coating.

The gum content is around 80% of the coating.

**Table 1.**

| Time (Minutes) | Product | Amount (grams) | Comments | Layer Number |
|---|---|---|---|---|
| 0:00 | Gum arabic solution 40% d.s. | 25 | Pre gumming | 1. pre-layer |
| 0:01 | Maltisorb P35 | 100 | | |
| 0:05 | Gum arabic solution 40% d.s. | 25 | | 2. pre-layer |
| 0:06 | Maltisorb P35 | 100 | | |
| 0:08 | Maltisorb P35 | 100 | | |
| 0:14 | Maltisorb P35 | 50 | Pause for 2 hours | |
| 0 (after pause) | Maltisorb 75/75 | 10 | Gum coating | 1. layer |
| 0:01 | GBP-T1 | 25 | | |
| 0:04 | Maltisorb 75/75 | 10 | | 2. layer |
| 0:06 | Maltisorb 75/75 | 10 | | |
| 0:07 | GBP-T1 | 25 | | |
| 0:12 | GBP-T1 | 25 | | |
| 0:15 | Maltisorb 75/75 | 10 | | 3. layer |
| 0:16 | GBP-T1 | 25 | | |
| 0:20 | Maltisorb 75/75 | 15 | | 4. layer |
| 0:21 | GBP-T1 | 25 | | |
| 0:25 | Maltisorb 75/75 | 15 | | 5. layer |
| 0:27 | GBP-T1 | 25 | | |
| 0:29 | GBP-T1 | 30 | | |
| 0:32 | Maltisorb 75/75 | 15 | | 6. layer |
| 0:34 | GBP-T1 | 30 | | |
| 0:36 | Maltisorb 75/75 | 15 | | 7. layer |
| 0:37 | GBP-T1 | 30 | | |
| 0:40 | GBP-T1 | 30 | | |
| 0:43 | Maltisorb 75/75 | 15 | | 8. layer |
| 0:44 | GBP-T1 | 30 | | |
| 0:47 | Maltisorb 75/75 | 15 | | 9. layer |
| 0:49 | GBP-T1 | 30 | | |
| 0:52 | Maltisorb 75/75 | 20 | | 10. layer |
| 0:53 | Menthol powder 80% | 10 | | |
| 0:54 | GBP-T1 | 40 | | |
| 1:00 | Maltisorb 75/75 | 20 | | 11. layer |
| 1:01 | GBP-T1 | 40 | | |
| 1:05 | Maltisorb 75/75 | 20 | | 12. layer |
| 1:08 | GBP-T1 | 40 | | |
| 1:12 | Maltisorb 75/75 | 20 | | 13. layer |
| 1:14 | GBP-T1 | 40 | | |
| 1:16 | Maltisorb 75/75 | 20 | | 14. layer |
| 1:17 | GBP-T1 | 40 | | |
| 1:19 | GBP-T1 | 40 | | |
| 1:22 | Maltisorb 75/75 | 20 | | 15. layer |
| 1:23 | GBP-T1 | 40 | | |
| 1:24 | GBP-T1 | 40 | | |
| 1:26 | Maltisorb 75/75 | 20 | | 16. layer |
| 1:27 | GBP-T1 | 40 | | |
| 1:29 | GBP-T1 | 40 | | |
| 1:31 | Maltisorb 75/75 | 20 | | 17. layer |
| 1:32 | GBP-T1 | 40 | | |
| 1:34 | GBP-T1 | 40 | | |
| 1:36 | Maltisorb 75/75 | 25 | | 18. layer |
| 1:37 | GBP-T1 | 40 | | |
| 1:38 | Peppermint flavour | 10 | | 19. layer |
| 1:39 | GBP-T1 | 40 | | |
| 1:40 | GBP-T1 | 40 | | |
| 1:41 | GBP-T1 | 40 | | |
| 1:47 | Maltisorb 75/75 | 25 | | 20. layer |
| 1:48 | GBP-T1 | 40 | | |
| 1:50 | GBP-T1 | 40 | | |
| 1:52 | Maltisorb 75/75 | 25 | | 21. layer |
| 1:53 | GBP-T1 | 40 | | |
| 1:55 | GBP-T1 | 40 | | |
| 1:57 | Maltisorb 75/75 | 25 | | 22. layer |
| 1:59 | GBP-T1 | 40 | | |
| 2:00 | GBP-T1 | 40 | | |
| 2:02 | Maltisorb 75/75 | 30 | | 23. layer |
| 2:04 | Splenda (sucralose) | 4 | | |
| 2:05 | GBP-T1 | 40 | | |
| 2:06 | GBP-T1 | 40 | | |
| 2:08 | Maltisorb 75/75 | 30 | | 24. layer |
| 2:09 | GBP-T1 | 40 | | |
| 2:10 | GBP-T1 | 40 | | |
| 2:12 | GBP-T1 | 40 | | |
| 2:14 | Maltisorb 75/75 | 30 | | 25. layer |
| 2:15 | GBP-T1 | 40 | | |
| 2:16 | GBP-T1 | 40 | | |
| 2:19 | Maltisorb 75/75 | 30 | | 26. layer |
| 2:20 | GBP-T1 | 40 | | |
| 2:21 | GBP-T1 | 40 | | |
| 2:24 | GBP-T1 | 40 | | |
| 2:26 | Maltisorb 75/75 | 30 | | 27. layer |
| 2:27 | Menthol powder 80% | 10 | | |
| 2:28 | GBP-T1 | 40 | | |
| 2:29 | GBP-T1 | 40 | | |
| 2:32 | Maltisorb 75/75 | 30 | | 28. layer |
| 2:33 | GBP-T1 | 40 | | |
| 2:34 | GBP-T1 | 40 | | |
| 2:37 | Peppermint flavour | 10 | | 29. layer |
| 2:38 | GBP-T1 | 40 | | |
| 2:39 | GBP-T1 | 40 | | |
| 2:40 | GBP-T1 | 40 | | |
| 2:41 | GBP-T1 | 40 | | |
| 2:43 | GBP-T1 | 40 | | |
| 2:46 | Maltisorb 75/75 | 30 | | 30. layer |
| 2:48 | GBP-T1 | 40 | | |
| 2:49 | GBP-T1 | 40 | | |
| 2:51 | Maltisorb 75/75 | 35 | | 31. layer |
| 2:53 | GBP-T1 | 40 | | |
| 2:54 | GBP-T1 | 40 | | |
| 2:58 | GBP-T1 | 40 | | |
| 2:59 | Maltisorb 75/75 | 35 | | 32. layer |
| 3:01 | GBP-T1 | 40 | | |
| 3.02 | GBP-T1 | 40 | | |
| 3:04 | GBP-T1 | 40 | | |
| 3:07 | Maltisorb P35 | 3 x 30 | Smoothening/drying | 33. layer |
| 3:25 | | | Finish gum coating | |
| | | | Hard coating | |
| Stage (each of 5 min. | 1 | 2 | 3 | 4 |
| Addition | 25 ml. | 30 ml. | 35 ml. | 40 ml. |
| Number of layers /repetition | 5 | 15 | 30 | 5 |
| Flavour stage | 10 ml. | 2 layers | peppermint oil | |
| Final stage | 35 ml. (brix 55) | 7 layers | smoothening | |

The chewing gum produced had a smooth surface, a fine texture and good chewability. The wet weight of the cud after chewing for 2 minutes was measured to 1.0 gr. / piece. Flavour release is comparable with traditional chewing gum. The process was conducted without any problems during every phase of the trail.

### Example 2.

During approx. 3.5 hours of active coating time, 33 layers are applied according to table 2.

**Table 2.**

| Time | Product | Amount (grams) | Comments | Layer Number |
|---|---|---|---|---|
| 0:00 | Gum arabic solution 40% d.s. | 25 | Pre gumming | 1. pre-layer |
| 0:02 | Maltisorb P35 | 100 | | |
| 0:06 | Gum arabic solution 40% d.s. | 25 | | 2. pre-layer |
| 0:07 | Maltisorb P35 | 100 | | |
| 0:08 | Maltisorb P35 | 100 | | |
| 0:15 | Maltisorb P35 | 50 | Pause for 2 hours | |
| 0:00 | Maltisorb 75/75 | 10 | Gum coating | 1. layer |
| 0:01 | All in Gum - SF | 25 | | |
| 0:06 | Maltisorb 75/75 | 10 | | 2. layer |
| 0:07 | All in Gum - SF | 40 | | |
| 0:12 | Maltisorb 75/75 | 10 | | 3. layer |
| 0:13 | All in Gum - SF | 40 | | |
| 0:18 | Maltisorb 75/75 | 15 | | 4. layer |
| 0:19 | All in Gum - SF | 40 | | |
| 0:24 | Maltisorb 75/75 | 15 | | 5. layer |
| 0:25 | All in Gum - SF | 40 | | |
| 0:29 | All in Gum - SF | 40 | | |
| 0:34 | Maltisorb 75/75 | 15 | | 7. layer |
| 0:35 | All in Gum - SF | 30 | | |
| 0:40 | All in Gum - SF | 30 | | |
| 0:45 | Maltisorb 75/75 | 15 | | 8. layer |
| 0:46 | All in Gum - SF | 40 | | |
| 0:49 | Maltisorb 75/75 | 15 | | 9. layer |
| 0:50 | All in Gum - SF | 45 | | |
| 0:54 | Sifting of "lumps" balling up in the back of the pan | | | |
| 0:54 | Maltisorb 75/75 | 20 | | 10. layer |
| 0:55 | Menthol powder 80% | 10 | | |
| 0:55 | All in Gum - SF | 45 | | |
| 1:00 | Maltisorb 75/75 | 20 | | 11. layer |
| 1:01 | All in Gum - SF | 45 | | |
| 1:05 | Maltisorb 75/75 | 20 | | 12. layer |
| 1:06 | All in Gum - SF | 45 | | |
| 1:11 | Maltisorb 75/75 | 20 | | 13. layer |
| 1:12 | All in Gum - SF | 45 | | |
| 1:17 | Maltisorb 75/75 | 20 | | 14. layer |
| 1:18 | All in Gum - SF | 45 | | |
| 1:23 | Maltisorb 75/75 | 20 | | 15.layer |
| 1:24 | All in Gum - SF | 45 | | |
| 1:25 | All in Gum - SF | 30 | | |
| 1:28 | Maltisorb 75/75 | 20 | | 16. layer |
| 1:29 | All in Gum - SF | 45 | | |
| 1:30 | All in Gum - SF | 30 | | |
| 1:34 | Sifting of "lumps" balling up in the back of the pan | | | |
| 1:34 | Maltisorb 75/75 | 20 | | 17. layer |
| 1:35 | All in Gum - SF | 45 | | |
| 1:36 | All in Gum - SF | 30 | | |
| 1:39 | Maltisorb 75/75 | 25 | | 18. layer |
| 1:40 | All in Gum - SF | 45 | | |
| 1:42 | Peppermint flavour | 10 | | 19. layer |
| 1:43 | All in Gum - SF | 45 | | |
| 1:48 | Maltisorb 75/75 | 25 | | 20. layer |
| 1:49 | All in Gum - SF | 45 | | |
| 1:53 | Maltisorb 75/75 | 25 | | 21. layer |
| 1:54 | All in Gum - SF | 45 | | |
| 1:55 | All in Gum - SF | 40 | | |
| 1:58 | Maltisorb 75/75 | 25 | | 22. layer |
| 1:59 | All in Gum - SF | 45 | | |
| 2:00 | All in Gum - SF | 45 | | |
| 2:03 | Sifting of "lumps" balling up in the back of the pan | | | |
| 2:03 | Maltisorb 75/75 | 30 | | 23. layer |
| 2:04 | Splenda (sucralose) | 3 | | |
| 2:05 | All in Gum - SF | 50 | | |
| 2:09 | Maltisorb 75/75 | 30 | | 24. layer |
| 2:10 | All in Gum - SF | 50 | | |
| 2:11 | All in Gum - SF | 40 | | |
| 2:15 | Maltisorb 75/75 | 30 | | 25. layer |
| 2:16 | All in Gum - SF | 50 | | |
| 2:16 | All in Gum - SF | 40 | | |
| 2:20 | Maltisorb 75/75 | 30 | | 26. layer |
| 2:21 | All in Gum - SF | 50 | | |
| 2:22 | All in Gum - SF | 40 | | |
| 2:27 | Maltisorb 75/75 | 30 | | 27. layer |
| 2:28 | Menthol powder 80% | 10 | | |
| 2:28 | All in Gum - SF | 50 | | |
| 2:29 | All in Gum - SF | 40 | | |
| 2:33 | Sifting of "lumps" balling up in the back of the pan | | | |
| 2:33 | Maltisorb 75/75 | 30 | | 28. layer |
| 2:34 | All in Gum - SF | 50 | | |
| 2:35 | All in Gum - SF | 40 | | |
| 2:39 | Peppermint flavour | 10 | | 29. layer |
| 2:40 | All in Gum - SF | 50 | | |
| 2:45 | All in Gum - SF | 50 | | |
| 2:49 | All in Gum - SF | 40 | | |
| 2:59 | Sifting of "lumps" balling up in the back of the pan | | | |
| 3:00 | Maltisorb 75/75 | 35 | | 32. layer |
| 3:01 | All in Gum - SF | 50 | | |
| 3.02 | All in Gum - SF | 50 | | |
| 3:05 | All in Gum - SF | 40 | | |
| 3:12 | Maltisorb P35 | 3x30 | Smoothening/drying | 33. layer |
| 3:20 | | | Finish gum coating | |
| 3:20 | Sifting of "lumps" balling up in the back of the pan | | | |
| | | | Hard coating | |

The chewing gum produced was evaluated as not usable, as the powdered chewing gum composition was washed off from the centres during the coating process and ended up in the siftings / lumps (the smaller balls in the back of the pan). The cud-size of the chewing gum was for this reason close to zero and the product can only be characterised as a coated tablet.

## Claims

1. A chewing gum comprising a) a core compartment, b) one or more layers comprising a powdered chewing gum composition, **characterised in that** the composition contains over 50% w/w chewing gum base, and further **characterised in that** at least 95% w/w of the particles of the composition have a particle size of less than 1200 micron in diameter.

2. A chewing gum according to claim 1, **characterised In that** the composition contains between 50% w/w and 90% w/w chewing gum base.

3. A chewing gum according to claim 2, **characterised in that** the composition contains between 70 and 85% w/w chewing gum base.

4. A chewing gum according to any of the preceding claims, wherein the chewing gum base has a softening point of between 50 - 65°C.

5. A chewing gum according to any of the preceding claims, wherein the chewing gum base has a softening point of 58 - 62°C.

6. A chewing gum according to any of the preceding claims, wherein at least **65%** w/w of the particles of the composition have a particle size of between 100 and 1000 micron.

7. A chewing gum according to any of the preceding claims, wherein said composition is a powder which is free flowing at temperatures between 5°C and 30°C.

8. A chewing gum according to any of the preceding claims, wherein said composition further comprises one or more of sweeteners, bulking agents, flavouring agents, colourants, antioxidants, and flow-improving agents.

9. A chewing gum according to any of the preceding claims, wherein the composition essentially consists of:
a) 50% w/w to about 99% w/w chewing gum base,
b) about 1% w/w to about 45% w/w bulking and/or sweetening agent
c) about 0.1% w/w to about 10% w/w flavouring agent,
d) about 1% w/w to about 30% w/w talc, and optionally
e) about 0.1 % w/w to about 20% w/w of another flow improving agent.

10. A chewing gum according to any of the preceding claims, further comprising c) an outer layer compartment.

11. A chewing gum according to any of the preceding claims, wherein the core compartment comprises a compound selected from confectioneries, nuts, dried or fresh fruits, flavourings, preparations comprising one or more active pharmaceutical Ingredients and/or nutraceutical supplements, such as but not limited to, fish oil, omega-3 fatty acids, prebiotics, probiotic bacteria, caffeine, guarana, vitamins, minerals and enzymes.

12. A chewing gum according to any of the preceding claims, wherein the composition constitutes at least 10% w/w of the chewing gum.

13. A method for production of a chewing gum comprising the steps of:
(a) providing a core composition; and
(b) coating of the core composition with a powdered chewing gum composition, **characterised in that** the powdered chewing gum composition contains over 50% w/w chewing gum base, and further **characterised in that** at least 95% w/w of the particles of the powdered chewing gum composition have a particle size of less than 1200 micron in diameter, by use of a panning process; and optionally
(c) coating the outer intermediate layer with an outer finishing layer by use of a panning process.

14. A chewing gum obtainable by the method of claim 13.

## Patentansprüche

1. Kaugummi, der folgendes aufweist:
a) einen Kernbereich,
b) eine oder mehrere Schichten, die eine pulverförmige Kaugummizusammensetzung aufweisen,
**dadurch gekennzeichnet, dass** die Zusammensetzung mehr als 50 Gew.-% Kaugummibase enthält und dass ferner mindestens 95 Gew.-% der Partikel der Zusammensetzung eine Partikelgröße von weniger als 1200 µm Durchmesser aufweisen.

2. Kaugummi nach Anspruch 1,
**dadurch gekennzeichnet, dass** die Zusammensetzung 50 bis 90 Gew.-% Kaugummibase enthält.

3. Kaugummi nach Anspruch 2,
**dadurch gekennzeichnet, dass** die Zusammensetzung 70 bis 85 Gew.-% Kaugummibase enthält.

4. Kaugummi nach einem der vorstehenden Ansprüche,
wobei die Kaugummibase einen Erweichungspunkt von 50 bis 65 °C aufweist.

5. Kaugummi nach einem der vorstehenden Ansprüche,
wobei die Kaugummibase einen Erweichungspunkt von 58 bis 62 °C aufweist.

6. Kaugummi nach einem der vorstehenden Ansprüche,
wobei mindestens 65 Gew.-% der Partikel der Zusammensetzung eine Partikelgröße von 100 bis 1000 µm aufweisen.

7. Kaugummi nach einem der vorstehenden Ansprüche,
wobei die Zusammensetzung ein Pulver ist, das bei Temperaturen von 5 bis 30 °C frei fließend ist.

8. Kaugummi nach einem der vorstehenden Ansprüche,
wobei die Zusammensetzung ferner ein oder mehrere Zusätze aus Süßungsmitteln, Füllstoffen, Aromastoffen, Färbemitteln, Antioxidantien und Fließverbesserern aufweist.

9. Kaugummi nach einem der vorstehenden Ansprüche,
wobei die Zusammensetzung im Wesentlichen aus folgendem besteht:
a) 50 bis etwa 99 Gew.-% Kaugummibase,
b) etwa 1 bis etwa 45 Gew.-% Füllstoff und/oder Süßungsmittel,
c) etwa 0,1 bis etwa 10 Gew.-% Aromastoff,
d) etwa 1 bis etwa 30 Gew.-% Talkum und gegebenenfalls
e) etwa 0,1 bis etwa 20 Gew.-% eines weiteren Fließverbesserers.

10. Kaugummi nach einem der vorstehenden Ansprüche,
der ferner c) einen Außenschichtbereich aufweist.

11. Kaugummi nach einem der vorstehenden Ansprüche,
wobei der Kernbereich eine Verbindung aufweist, die ausgewählt ist aus: Konfekt, Nüssen, getrockneten oder frischen Früchten, Aromastoffen, Zubereitungen, die einen oder mehrere wirksame pharmazeutische Bestandteile und/oder Nahrungsergänzungsmittel aufweisen, wie Fischöl, Omega-3-fettsäuren, Präbiotika, probiotische Bakterien, Koffein, Guarana, Vitamine, Mineralien und Enzyme, wobei diese jedoch nicht darauf begrenzt sind.

12. Kaugummi nach einem der vorstehenden Ansprüche,
wobei die Zusammensetzung mindestens 10 Gew.-% des Kaugummis ausmacht.

13. Verfahren zum Herstellen eines Kaugummis, das die folgenden Schritte aufweist:
(a) Bereitstellen einer Kernzusammensetzung und
(b) Überziehen der Kernzusammensetzung mit einer pulverförmigen Kaugummizusammensetzung,
**dadurch gekennzeichnet, dass** die pulverförmige Kaugummizusammensetzung mehr als 50 Gew.-% Kaugummibase enthält und dass ferner mindestens 95 Gew.-% der Partikel der pulverförmigen Kaugummizusammensetzung eine Partikelgröße von weniger als 1200 µm Durchmesser haben, durch Anwendung eines Schwenkverfahrens, und gegebenenfalls
(c) Überziehen der äußeren Zwischenschicht mit einer äußeren Deckschicht durch Anwendung eines Schwenkverfahrens.

14. Kaugummi, der nach dem Verfahren nach Anspruch 13 erhalten werden kann.

## Revendications

1. Gomme à mâcher comprenant a) un compartiment de coeur, b) une ou plusieurs couches comprenant une composition de gomme à mâcher en poudre, **caractérisée en ce que** la composition contient plus de 50 % p/p d'une base de gomme à mâcher, et **caractérisée en outre en ce qu'**au moins 95 % p/p des particules de la composition ont une taille de particule inférieure à 1200 microns de diamètre.

2. Gomme à mâcher selon la revendication 1, **caractérisée en ce que** la composition contient entre 50 % p/p et 90 % p/p d'une base de gomme à mâcher.

3. Gomme à mâcher selon la revendication 2, **caractérisée en ce que** la composition contient entre 70 % p/p et 85 % p/p d'une base de gomme à mâcher.

4. Gomme à mâcher selon l'une quelconque des revendications précédentes, dans laquelle la base de gomme à mâcher présente un point de ramollissement compris entre 50° C et 65° C.

5. Gomme à mâcher selon l'une quelconque des revendications précédentes, dans laquelle la base de gomme à mâcher présente un point de ramollissement de 58° C à 62° C.

6. Gomme à mâcher selon l'une quelconque des revendications précédentes, dans laquelle au moins 65 % p/p des particules de la composition ont une taille de particule comprise entre 100 et 1 000 microns.

7. Gomme à mâcher selon l'une quelconque des revendications précédentes, dans laquelle ladite composition est une poudre qui s'écoule librement à des températures comprises entre 5° C et 30° C.

8. Gomme à mâcher selon l'une quelconque des revendications précédentes, dans laquelle ladite composition comprend en outre l'un ou plusieurs parmi des édulcorants, des agents gonflants, des agents aromatisants, des colorants, des antioxydants et des agents améliorant l'écoulement.

9. Gomme à mâcher selon l'une quelconque des revendications précédentes, dans laquelle la composition consiste essentiellement en :
a) 50 % p/p à environ 99 % p/p d'une base de gomme à mâcher,
b) environ 1 % p/p à environ 45 % p/p d'un agent gonflant et/ou d'un agent édulcorant,
c) environ 0,1 % p/p à environ 10 % p/p d'un agent aromatisant,
d) environ 1 % p/p à environ 30 % p/p de talc, et éventuellement
e) environ 0,1 % p/p à environ 20 % p/p d'un autre agent améliorant l'écoulement.

10. Gomme à mâcher selon l'une quelconque des revendications précédentes, comprenant en outre c) un compartiment de couche extérieure.

11. Gomme à mâcher selon l'une quelconque des revendications précédentes, dans laquelle le compartiment de coeur comprend un composé choisi parmi des confiseries, des noix, des fruits secs ou frais, des aromatisants, des préparations comprenant un ou plusieurs ingrédients pharmaceutiquement actifs et/ou des suppléments nutraceutiques, tels que, mais sans y être limité, de l'huile de poisson, des acides gras oméga 3, des prébiotiques, des bactéries probiotiques, de la caféine, du guarana, des vitamines, des minéraux et des enzymes.

12. Gomme à mâcher selon l'une quelconque des revendications précédentes, dans laquelle la composition constitue au moins 10 % p/p de la gomme à mâcher.

13. Procédé de production d'une gomme à mâcher comprenant les étapes consistant à:
(a) fournir une composition de coeur ; et
(b) revêtir la composition de coeur avec une composition de gomme à mâcher en poudre, **caractérisé en ce que** la composition de gomme à mâcher en poudre contient plus de 50 % p/p d'une base de gomme à mâcher, et **caractérisé en outre en ce qu'**au moins 95 % p/p des particules de la composition de gomme à mâcher en poudre ont une taille de particule inférieure à 1 200 microns de diamètre, par l'utilisation d'un procédé de dragéification; et éventuellement
(c) revêtir la couche intermédiaire extérieure avec une couche de finition extérieure par l'utilisation d'un procédé de dragéification.

14. Gomme à mâcher qui peut être obtenue par le procédé selon la revendication 13.
